# EUROPÄISCHE PATENTSCHRIFT

(11) **EP 1 506 432 B1**
(45) Veröffentlichungstag und Bekanntmachung des Hinweises auf die Patenterteilung: **01.08.2007**
(21) Anmeldenummer: 03787682.8
(22) Anmeldetag: 18.07.2003
(51) Int. Cl.: G01S 13/93

(54) **SENSOR ZUM AUSSENDEN UND EMPFANGEN VON ELEKTROMAGNETISCHEN SIGNALEN**
SENSOR FOR TRANSMITTING AND RECEIVING ELECTROMAGNETIC SIGNALS
DETECTEUR D'EMISSION ET DE RECEPTION DE SIGNAUX ELECTROMAGNETIQUES

(30) Priorität: 23.07.2002 DE 10233523
(43) Veröffentlichungstag der Anmeldung: 16.02.2005
(73) Patentinhaber: S.M.S. Smart Microwave Sensors GmbH, 38106 Braunschweig (DE)
(72) Erfinder: MENDE, Ralph, 38106 Braunschweig (DE)
(74) Vertreter: Lins, Edgar
(86) Internationale Anmeldenummer: PCT/DE2003/002417
(87) Internationale Veröffentlichungsnummer: WO 2004/017093

(56) Entgegenhaltungen:
- EP-A- 0 676 825
- DE-A- 19 951 123
- DE-C- 3 622 447

## Beschreibung

Die Erfindung betrifft einen Sensor nach dem Oberbegriff des Patentanspruchs 1.

Derartige Sensoren werden insbesondere als Radarsensoren in zunehmendem Maße für die Umfeldsensierung von Fahrzeugen eingesetzt. Im äußersten Nahbereich dienen Radarsensoren zur Ausbildung von Einparkhilfen. Darüber hinaus ist es bekannt, dass Radarsensoren auch zur Überwachung der Fahrspur hinter einem Fahrzeug, aber auch neben einem Fahrzeug verwendet werden können, um beispielsweise den Fahrer eines Automobils vor Kollisionsgefahren beim Überholen, Tür öffnen usw. zu warnen.

Die Sensoren müssen in geeigneter Weise Sendesignale erzeugen. Es ist bekannt, Sendesignale in Form eines einzelnen Impulses auszusenden und die Zeit zu bestimmen, nach der ein reflektiertes Empfangssignal empfangen worden ist. Aus der Zeit der Differenz zwischen der Aussendung und dem Empfang des Impulses ergibt sich der Abstand des Gegenstandes von dem Sensor.

Es ist ferner bekannt (DE 100 50 278 A1), die Sendesignale in geschickter Weise in ihrer Frequenz zu verändern, um aus der Frequenz des Sendesignals zum Zeitpunkt des Empfangs eines reflektierten Empfangssignals und aus der Frequenz des Empfangssignals sowohl eine Orts- als auch eine Geschwindigkeitsbestimmung vornehmen zu können. Die Aussendung der frequenzmäßig veränderten Signale kann dabei praktisch kontinuierlich erfolgen.

Für die Überwachung der verschiedenen Umfeldbereiche eines Fahrzeugs müssen somit jeweils verschiedene Sensoren eingesetzt werden, die mit den entsprechenden Steuerungen zur Formung der Sendesignale versehen sind. Der hiermit verbundene finanzielle Aufwand ist nicht unerheblich.

Durch EP 0 676 825 A2 ist es bekannt, eine Radarantenne mit Hilfe eines teildurchlässigen Elements und speziellen Umlenkreflektoren so auszubilden, dass neben einer Fernkeule wenigstens ein nach unten gerichteter Sendestrahl ausgebildet wird. Die Fernkeule dient zur Geschwindigkeitserkennung, während der nach unten gerichtete Strahl als Klassifizierungsstrahl verwendet wird.

Durch DE 36 22 447 C1 offenbart die Möglichkeit, mittels der bei jeder realen Sende- und Empfangskeule vorhandenen Nebenkeulen bzw. Nebenzipfel Abstand und Relativgeschwindigkeit eines außerhalb des Haupt-Sendebereichs befindlichen Objektes zu bestimmen. Eine besondere Ausbildung der Nebenzipfel ist dabei nicht erwähnt.

DE 199 51 123 A1 und DE 100 57 564 A1 offenbaren die Ansteuerung einer planaren Sende- und Empfangsantenne, bei der zahlreiche Sendepads in zahlreichen Reihen vorgesehen sind, wobei die Reihen von einer Steuerschaltung über wenigstens eine Rotman-Linse angesteuert werden. Auch dabei wird eine Sendeantenne realisiert, die neben dem Haupt-Ausstrahlungsbereich winkelmäßig benachbart Neben-Ausstrahlungsbereiche aufweist, die symmetrisch zum Haupt-Ausstrahlungsbereich liegen. In der DE 199 51 123 A1 ist die Tatsache erwähnt, dass die im Normalfall senkrecht zu der geometrischen Ausrichtung der Planarantenne liegende azimutale Ausrichtung der Hauptkeule durch eine unterschiedliche Ansteuerung der Rotman-Linse steuerbar ist. Eine Auswirkung dieser Steuerung auf die Neben-Ausstrahlungsbereiche ist nicht erwähnt. Es wird lediglich darauf verwiesen, dass durch die Verstellung der azimutalen Ausrichtung eine Winkelauflösung der Radarantenne ohne ein mechanisches Verstellen allein auf elektronischem Weg erreichbar ist.

In der DE 100 57 564 A1 ist eine azimutale Verbreiterung des Ausstrahlungsbereichs der Sendeantenne beschrieben, die bei einer Normalausrichtung des Haupt-Ausstrahlungsbereichs mit Hilfe von zusätzlichen Rotman-Linsen erzielt wird. Dies gelingt über eine unmittelbare Beeinflussung der Abstrahlleistung des Antennen-Arrays über die Eigenschaften der Rotman-Linsen in Verbindung mit entsprechenden Verzögerungsleitungen, über die die Steuersignale auf die Sendepads in flächig definierter Zuordnung gelangen. Die Ausbildung von Rotman-Linsen, die speziell geformte Parallelplattenleiter sind, ist kostenaufwändig und erfordert einen nicht unerheblichen Raumbedarf.

Der vorliegenden Erfindung liegt die Aufgabe zugrunde; einen Sensor der eingangs erwähnten Art anzugeben, der eine preiswerte und kompakte Umweltsensierung, insbesondere für Fahrzeuge, ermöglicht.

Zur Lösung dieser Aufgabe ist erfindungsgemäß ein Sensor der eingangs erwähnten Art mit den Merkmalen des Patentanspruchs 1 ausgebildet.

Der erfindungsgemäße Sensor erlaubt somit die Überwachung zweier in einem Winkel zueinander stehenden Bereiche mit einem einzigen Sensor, vorzugsweise mit einer einzigen Sendeantenne. Die Sendeantennenanordnung ist so ausgebildet, dass sie neben ihrem keulenförmigen Haupt-Ausstrahlungsbereich einen ausgeprägten keulenförmigen Neben-Ausstrahlungsbereich aufweist.

Es ist grundsätzlich bekannt, dass Antennen neben dem genutzten Ausstrahlungs- oder Empfangsbereich auch geringere Empfindlichkeiten in Nebenkeulen aufweisen. Die Abstimmung der Antennen wird regelmäßig so vorgenommen, dass die Nebenkeulen möglichst unterdrückt werden, weil damit regelmäßig unerwünschte Signalausstrahlungen oder Signalempfänge erreicht werden.

Erfindungsgemäß, wird demgegenüber die Sendeantennenanordnung so ausgebildet, dass die Sendeantennenanordnung eine möglichst ausgeprägte Nebenkeule aufweist, die für die Aussendung von Sendesignalen planmäßig genutzt wird.

Die Ausbildung einer ausgeprägten Nebenkeule gelingt auf einer einzigen Sendeantenne dadurch, dass die Sendeantenne so angesteuert wird, dass der Haupt-Ausstrahlungsbereich in einem spitzen Winkel zu einer geometrischen Ausrichtung der Sendeantenne steht. Dies wird als schielende Antenne bezeichnet. Bei einer schielenden Antenne lässt sich eine ausgeprägte Nebenkeule in der der Schielrichtung entgegengesetzten Richtung ausbilden.

Der spitze Winkel (Schielwinkel) liegt vorzugsweise zwischen 10° und 30°, weiter bevorzugt bei 20°.

In einer bevorzugten Ausführungsform der Erfindung ist die Sendereichweite im Haupt-Ausstrahlungsbereich mehr als doppelt so groß, vorzugsweise mehr als viermal so groß, wie in dem Neben-Ausstrahlungsbereich. Für eine Anwendung bei einem Kraftfahrzeug ist es vorteilhaft, die Reichweite im Haupt-Ausstrahlungsbereich zwischen 30 und 50 m und im Neben-Ausstrahlungsbereich zwischen 2 und 10 m auszubilden. Der Winkel zwischen Haupt-Ausstrahlungsbereich und Neben-Ausstrahlungsbereich beträgt mehr als 45°.

Die Empfangsantennenanordnung ist mit zwei vorzugsweise identischen Empfangsantennen ausgebildet, die beide jeweils zum Empfang von aus beiden Ausstrahlungsbereichen reflektierten Empfangssignalen ausgelegt sind, wodurch zusätzliche Winkelinformationen erhältlich sind.

Besonders bevorzugt sind die Sendeantenne und die Empfangsantenne(n) als planare Antennen ausgebildet, sodass die Sensoren raumsparend aufgebaut werden können.

Die Erfindung soll im Folgenden anhand eines in der Zeichnung dargestellten Ausführungsbeispiels näher erläutert werden. Es zeigen:
- **Figur 1**: eine Sendeantenne mit einem Haupt-Ausstrahlungsbereich und einem Neben-Ausstrahlungsbereich
- **Figur 2**: eine schematische Darstellung eines Fahrzeugs mit einem Radarsensor mit einer Sendeantenne mit den Eigenschaften gemäß Figur 1
- **Figur 3**: eine Darstellung einer Sendeantenne und zweier Empfangsantennen als planare Antennen.

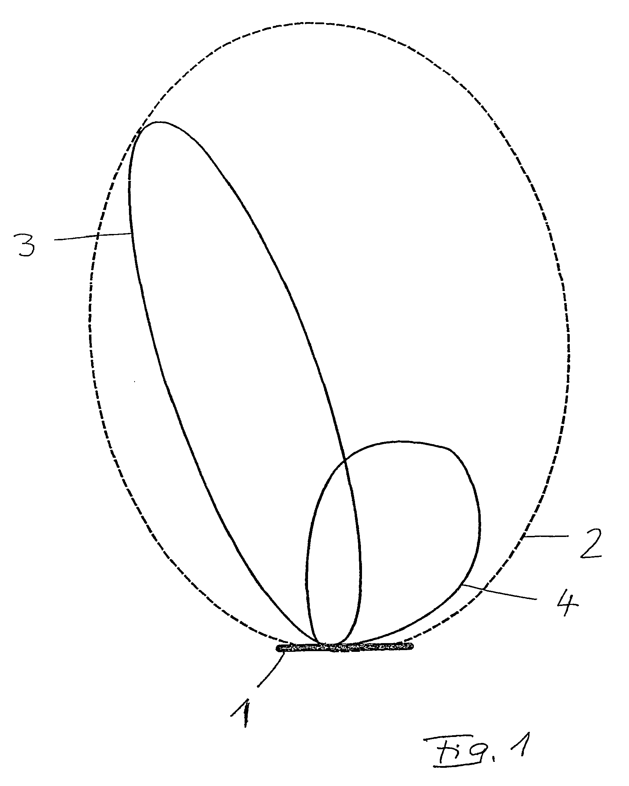

Figur 1 verdeutlicht eine Antennenanordnung, deren Empfangsbereich einer Empfangsantenne durch eine gestrichelt dargestellte Ellipse 2 angedeutet ist.

Eine planare Sendeantenne 1 strahlt von ihrer Abstrahlfläche in einem keulenförmigen Haupt-Ausstrahlungsbereich 3 und einem ebenfalls keulenförmigen Neben-Ausstrahlungsbereich 4 aus.

Die Ausbildung des ausgeprägten Neben-Ausstrahlungsbereichs 4 gelingt dadurch, dass die Sendeantenne 1 so angesteuert wird, dass der Haupt-Ausstrahlungsbereich 3 nicht symmetrisch zur Senkrechten auf der Ebene (Abstrahlfläche) der als planare Antenne ausgebildete Sendeantenne 1 steht, sondern mit der Senkrechten einen Winkel von ca. 20° bildet. Aufgrund des Schielens des Haupt-Ausstrahtungsbereichs 3 entsteht der ausgeprägte Neben-Ausstrahtungsbereich 4, dessen Mittenachse mit der Mittenachse des Haupt-Ausstrahlungsbereichs 3 einen Winkel von > 45° einschließt und durchaus 90° und sogar etwas darüber betragen kann.

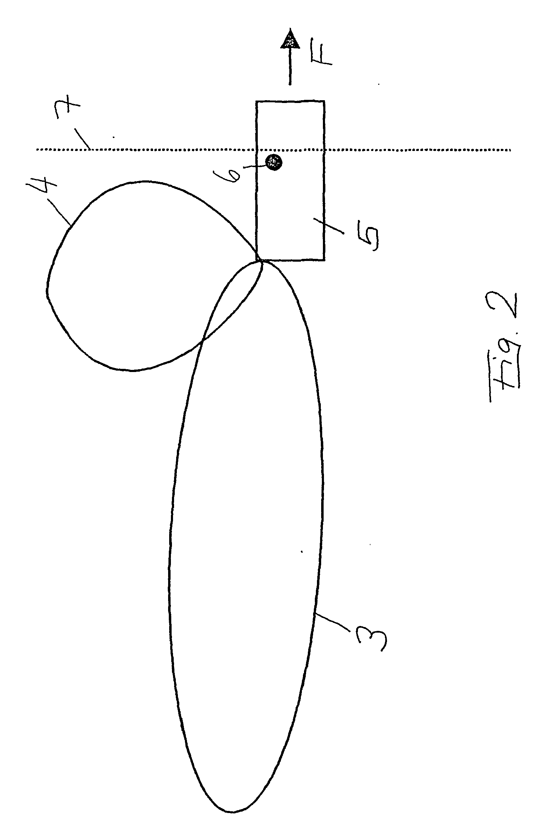

Figur 2 verdeutlicht, dass die Sendeantenne 1 in einem Kraftfahrzeug 5 zweckmäßiger Weise um den Schielwinkel schräg eingebaut wird, sodass der Haupt-Ausstrahlungsbereich 3 etwa parallel zur Längsachse des Kraftfahrzeugs 5 verläuft. Der Neben-Ausstrahlungsbereich 4 erstreckt sich dann in einen Bereich seitlich vom Kraftfahrzeug 5, wenn die Sendeantenne 1 an einer in Fahrtrichtung F gesehen hinteren Ecke des Kraftfahrzeugs 5 angebracht ist.

Durch einen Vollkreis 6 ist die Position eines Fahrers des Kraftfahrzeugs 5 angedeutet, durch eine punktierte Linie 7 etwa der Sichtbereich des in Fahrtrichtung F guckenden Fahrers. Es wird somit deutlich, dass der Neben-Ausstrahlungsbereich nahezu den gesamten toten Winkel des Fahrers an der Position 6 ausfüllt.

Es gelingt somit, mit einer einzigen Sendeantennenanordnung den Bereich hinter dem Kraftfahrzeug 5 zur Erkennung sich nähernder Fahrzeuge auf einer oder mehreren Fahrspuren und den Bereich neben dem Kraftfahrzeug 6 zur Erfassung des toten Winkels des Fahrers zu überwachen.

Vorzugsweise erstreckt sich die Reichweite in dem Haupt-Ausstrahlungsbereich 3 auf 30 bis 50 m, während die Reichweite in dem Neben-Ausstrahlungsbereich 4 sinnvollerweise zwischen 2 und 10 m betragen kann. Typischerweise erstreckt sich die Reichweite im Neben-Ausstrahlungsbereich 4 auf ca. 5 m.

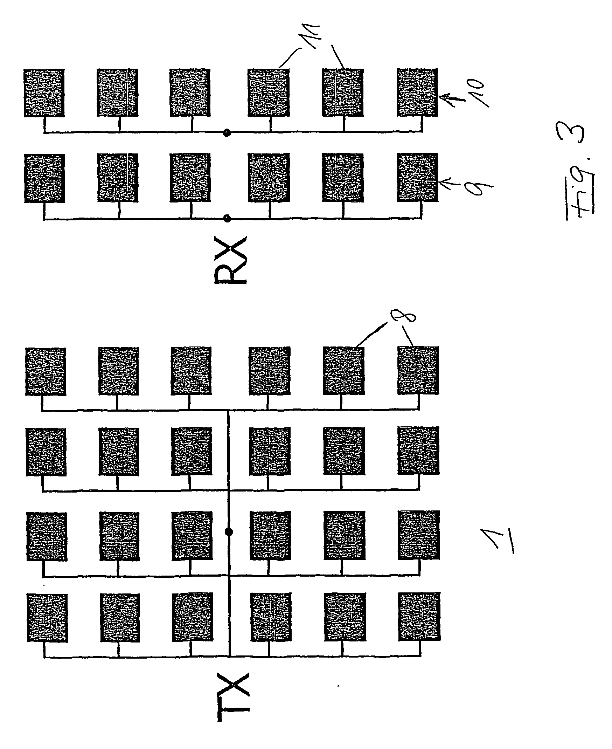

Figur 3 verdeutlicht ein Beispiel für eine planare Sendeantenne 1 (TX) die aus 24 Sendepads 8 besteht, die so angesteuert werden, dass eine gewünschte Sendecharakteristik eingestellt wird. Im Falle der Figur 1 wird die Sendecharakteristik für eine schielende Antenne eingestellt.

Die Empfangsantennenanordnung RX besteht aus zwei Empfangsantennen 9, 10 die aus zwei linearen Arrays von Empfangspads 11 gebildet sind. Deren Ansteuerung bestimmt die Empfangscharakteristik der Empfangsantennen 9, 10. Die Empfangsantennen 9, 10 sind jeweils zum Empfang von im Haupt-Ausstrahlungsbereich 3 reflektierten Empfangssignalen und zum Empfang von im Neben-Ausstrahlungsbereich 4 reflektierten Empfangssignalen eingerichtet. Eine Signaltrennung in der Empfangsantennenanordnung ist möglich und es kann erkannt werden, ob sich ein nähernder Gegenstand hinter dem Kraftfahrzeug 5 im Haupt-Ausstrahlungsbereich 3 oder neben dem Kraftfahrzeug 5 im Neben-Ausstrahlungsbereich 4 befindet, wenn ein Winkel nach dem Monopulsverfahren aus der Phasendifferenz der empfangenen Signale bestimmt wird.

Jede der Empfangsantennen 9, 10 ist daher auf den Empfang von Empfangssignalen aus beiden Ausstrahlungsbereichen 3, 4 eingerichtet.

## Patentansprüche

1. Sensor mit einem Gehäuse, in dem eine Sendeantennenanordnung (TX) zur Aussendung von elektromagnetischen Sendesignalen in einen Ausstrahlungsbereich und eine Empfangsantennenanordnung (RX) zum Empfang von an wenigstens einem Gegenstand innerhalb des Ausstrahlungsbereichs reflektierten Empfangssignalen und zur Gewinnung einer Winkelinformation angeordnet ist, wobei die Sendeantennenanordnung (TX) mit einer planaren Sendeantenne (1) mit einer Mehrzahl von Sendepads (8) ausgebildet ist, **dadurch gekennzeichnet, dass** die Sendeantenne (1) durch die Ansteuerung der Sendepads (8) als schielende Antenne abgestimmt ist, bei der der Haupt-Ausstrahlungsbereich (3) in einem spitzen Winkel zu der geometrischen Ausrichtung der Sendeantenne (1) steht und eine ausgeprägte Nebenkeule als Neben-Ausstrahlungsbereich (4) der Sendeantenne (1) in der der Schielrichtung entgegen gesetzten Richtung in einem Winkel von mehr als 45° zum Haupt-Ausstrahlungsbereich (3) ausgebildet ist, dass die Sendesignale planmäßig in dem Haupt-Ausstrahlungsbereich (3) und in der ausgeprägten Nebenkeule (4) ausgesandt werden und dass die Empfangsantennenanordnung (RX) zwei Empfangsantennen (9, 10) aufweist, die jeweils zum Empfang von in beiden Ausstrahlungsbereichen (3, 4) reflektierten Empfangssignalen ausgebildet sind und die zur Bestimmung einer Winkelinformation nach dem Monopulsverfahren aus der Phasendifferenz der empfangenen Signale eingerichtet sind.

2. Sensor nach Anspruch 1, **dadurch gekennzeichnet, dass** die Sendereichweite in dem Haupt-Ausstrahlungsbereich (3) mehr als doppelt so groß ist wie in dem Neben-Ausstrahlungsbereich (4).

3. Sensor nach Anspruch 2, **dadurch gekennzeichnet, dass** die Sendereichweite in dem Haupt-Ausstrahlungsbereich (3) mehr als viermal so groß ist wie in dem Neben-Ausstrahlungsbereich (4).

4. Sensor nach Anspruch 2 oder 3, **dadurch gekennzeichnet, dass** die Reichweite im Haupt-Ausstrahlungsbereich (3) zwischen 30 und 50 m und im Neben-Ausstrahlungsbereich (4) zwischen 2 und 10 m beträgt.

5. Sensor nach einem der Ansprüche 1 bis 4, **dadurch gekennzeichnet, dass** die Empfangsantennen (9, 10) als planare Antennen ausgebildet sind.

6. Sensor nach einem der Ansprüche 1 bis 5, **dadurch gekennzeichnet, dass** er zur Aussendung und zum Empfang von Radarsignalen eingerichtet ist.

## Claims

1. Sensor having a housing in which a transmitting antenna device (TX) is arranged for transmitting electromagnetic transmission signals in a radiation area, and a receiving antenna device (RX) is arranged for receiving reception signals which are reflected at at least one object within the radiation area for acquiring angle information, wherein the transmitting antenna device (TX) is embodied with a planar transmitting antenna (1) with a plurality of transmitting pads (8), **characterized in that** the transmitting antenna (1) is tuned by actuating the transmitting pads (8) as a squinting antenna in which the main radiation area (3) is at an acute angle to the geometric orientation of the transmitting antenna (1), and a defined secondary lobe is formed as a secondary radiation area (4) of the transmitting antenna (1) in the direction opposed to the squinting direction, at angle of more than 45° with respect to the main radiation area (3), **in that** the transmission signals are emitted intentionally in the main radiation area (3) and in the defined secondary lobe (4), and **in that** the receiving antenna device (RX) has two receiving antennas (9, 10) which are each designed to receive reception signals reflected in both radiation areas (3, 4) and which are configured to determine angle information from the phase difference between the received signals using the monopulse method.

2. Sensor according to Claim 1, **characterized in that** the transmission range in the main radiation area (3) is more than twice as large as in the secondary radiation area (4).

3. Sensor according to Claim 2, **characterized in that** the transmission range in the main radiation area (3) is more than four times as large as in the secondary radiation area (4).

4. Sensor according to Claim 2 or 3, **characterized in that** the range is between 30 and 50 m in the main radiation area (3), and is between 2 and 10 m in the secondary radiation area (4).

5. Sensor according to one of Claims 1 to 4, **characterized in that** the receiving antenna (9, 10) are embodied as planar antennas.

6. Sensor according to one of Claims 1 to 5, **characterized in that** it is configured to transmit and receive radar signals.

## Revendications

1. - Détecteur comportant un boîtier dans lequel est disposé un agencement d'antenne d'émission (TX) pour l'émission de signaux d'émission électromagnétiques dans un domaine de rayonnement et un agencement d'antenne de réception (RX) pour la réception de signaux de réception réfléchis sur au moins un objet situé dans le domaine de rayonnement pour obtenir une information angulaire, l'agencement d'antenne d'émission (TX) étant constitué par une antenne d'émission plane (1) avec une pluralité de plaquettes d'émission (8), **caractérisé en ce que** l'antenne d'émission (1) est réglée en tant qu'antenne déportée par la commande des plaquettes d'émission (8) dans laquelle la zone de rayonnement principale (3) est située dans un angle aigu par rapport à l'orientation géométrique de l'antenne d'émission (1) et un lobe caractéristique secondaire en tant que zone de rayonnement secondaire (4) dans laquelle la direction opposée à la direction de déport est située dans un angle de plus de 45° par rapport à la zone de rayonnement principale (3) **en ce que** les signaux d'émission sont émis systématiquement dans la zone de rayonnement principale (3) et dans le lobe caractéristique secondaire (4) et **en ce que** l'agencement d'antenne de réception (RX) présente deux antennes de réception (9, 10) qui sont conçues chacune pour recevoir les signaux de réception réfléchis dans les deux zones de rayonnement (3, 4) et qui sont adaptés pour déterminer une information angulaire selon le procédé monopulse à partir de la différence de phases des signaux reçus.

2. - Détecteur selon la revendication 1, **caractérisé en ce que** la portée de l'émission dans la zone de rayonnement principale (3) est plus du double de celle dans la zone de rayonnement secondaire (4).

3. - Détecteur selon la revendication 2, **caractérisé en ce que** la portée de l'émission dans la zone de rayonnement principale (3) est plus de quatre fois supérieure à celle dans la zone de rayonnement secondaire (4).

4. - Détecteur selon la revendication 2 ou 3, **caractérisé en ce que** la portée dans la zone de rayonnement principale (3) est comprise entre 30 et 50 m et la portée dans la zone de rayonnement secondaire est comprise entre 2 et 10 m.

5. - Détecteur selon l'une des revendications 1 à 4, **caractérisé en ce que** les antennes de réception (9, 10) sont conformées en tant qu'antennes planes.

6. - Détecteur selon l'une des revendications 1 à 5, **caractérisé en ce qu'**il est conçu pour émettre et recevoir des signaux radar.
